(19) Europäisches Patentamt
European Patent Office
Office européen des brevets

(11) **EP 2 270 517 A1**

(12) **EUROPEAN PATENT APPLICATION**

(43) Date of publication:
**05.01.2011 Bulletin 2011/01**

(51) Int Cl.:
***G01P 3/36*** (2006.01)

(21) Application number: **10166834.1**

(22) Date of filing: **22.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **01.07.2009 JP 2009157049**

(71) Applicant: **Canon Kabushiki Kaisha Tokyo 146-8501 (JP)**

(72) Inventor: **Igaki, Masahiko Tokyo Tokyo 146-8501 (JP)**

(74) Representative: **TBK-Patent Bavariaring 4-6 80336 München (DE)**

(54) **Optical device for measuring displacement or speed**

(57)     The measurement apparatus is capable of performing measurement of a relative displacement amount or a relative displacement speed between the apparatus and a measuring object (20). The apparatus includes a light source (10) emitting a divergent light flux with coherency, and a light-receiving element (31) converting reflection optical images (SP) formed by the divergent light flux into electrical signals. A light-emitting surface of the light source and a light-receiving surface of the light-receiving element are disposed on a same plane (C), and the apparatus projects the divergent light flux onto the measuring object without using an optical surface. A condition of $\tan(\theta/2) > D/(2 \cdot L)$ is satisfied where $\theta$ represents a light distribution angle range of the light source, D represents a distance between centers of a light-emitting area and a light-receiving area, and L represents a distance between the light source and the measuring object.

FIG. 2

**Description**

BACKGROUND OF THE INVENTION

Field of the Invention

The present invention relates to a measurement apparatus that performs noncontact measurement of a displacement amount or a displacement speed of a measuring object by using a speckle pattern generated by diffusely-reflected light from the measuring object which is irradiated with light with coherency (coherent light) or by using optical images having a light intensity distribution generated by an image-forming effect or an interference effect of a concave-convex shape of a surface of the measuring object.

Description of the Related Art

Projection of coherent light such as He-Ne laser onto a scattering surface generates an irregular granular pattern. Such a granular pattern is formed by interfering light generated as a result of superposition of scattering lights having a random phase relationship caused by random scattering and diffraction at the scattering surface, the granular pattern being called a speckle pattern.

Use of the speckle pattern enables measurement of a displacement amount and a displacement speed of a measuring object. Static and dynamic characteristics of the speckle pattern and applications thereof to various measurements are well known. Japanese Patent Laid-Open Nos. 63-274807 and 51-124454 has disclosed methods for measuring surface roughness of a measuring object using the speckle pattern.

In such measurements, using an image-forming optical system is not necessarily needed to generate the speckle pattern, and mere free space propagation of scattering light produced by projection of laser light to a rough surface object generates the speckle pattern. This speckle pattern is called a diffraction field speckle pattern. The diffraction field speckle pattern is also moved, except for special cases, at a certain ratio that is determined by measurement system arrangement, with movement of the rough surface object.

As methods for detecting the movement of the speckle pattern, a method in which an image sensor or a photodiode array is disposed at a generation surface of the speckle pattern or an image-forming surface thereof is proposed. Further, a method in which images of the speckle pattern before and after its movement are doubly recorded on a photosensitive material is proposed.

A speed measuring method using the diffraction field speckle pattern of laser light (diffraction field laser speckle) has been disclosed in Japanese Patent Laid-Open No. 4-86562. However, in such a speed measuring method using the diffraction field laser speckle in which light reflected by a moving object is received, a large measurement error is caused due to vibration or inclination of the moving object. In particular, the inclination of the moving object prevents the reception of the reflected light, which makes it impossible to perform the speed measurement.

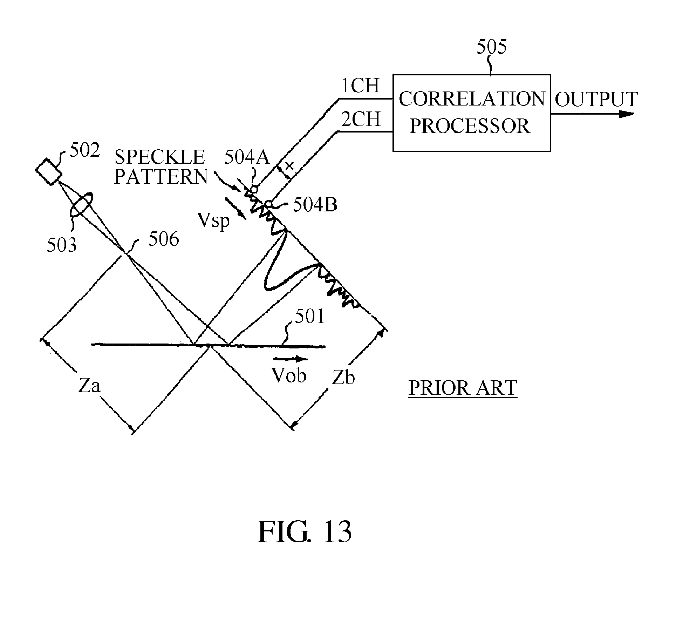

FIG. 13 shows an outline of the speed measuring method disclosed in Japanese Patent Laid-Open No. 4-86562. Laser light from a laser light source 502 is projected obliquely to a surface of a moving object (rough surface object) 501 that is moving in its in-plane direction to the right in the figure through a projection lens 503. Then, the laser light reflected by the moving object 501 is detected by light-receiving sensors 504A and 504B arranged in parallel with a translation direction of the speckle pattern, and a movement speed of the moving object 501 is obtained by cross correlation processing performed by a correlation processor 505 on a time lag amount between the reflected laser lights (light-receiving signals) detected by the light-receiving sensors 504A and 504B.

In FIG. 13, Vob represents the movement speed of the moving object 501, σ represents a translation magnification, and Vsp represents a movement speed of the speckle pattern on the light-receiving sensors 504A and 504B. Further, X represents a distance between the light-receiving sensors 504A and 504B, and Za represents a distance between the moving object 501 and a beam waist 506 that is formed between the projection lens 503 and the moving object 501. Moreover, Zb represents a distance between the moving object 501 and the light-receiving sensors 504A and 504B. The time lag amount $\tau d$ of the light-receiving signals detected by the light-receiving sensors 504A and 504B is given by the following expressions:

$$\mathrm{Vob} = \sigma \times \mathrm{Vsp}$$

$$\sigma = 1 + \mathrm{Zb}/\mathrm{Za}$$

$$\tau d = \mathrm{X}/\mathrm{Vob} = \mathrm{X}/\sigma \mathrm{Vsp}$$

where X and σ are assumed to be known.

The light-receiving sensor 504B outputs the light-receiving signal having a waveform similar to that of the light-receiving signal output from the light-receiving sensor 504A and including the time lag amount $\tau d$ with respect to the light-receiving signal output from the light-receiving sensor 504A. Therefore, measuring the time lag amount $\tau d$ makes it possible to calculate the movement speed Vob of the moving object 501 by using the above-described expressions.

In such a measurement system, an out-of-plane displacement of the moving object 501 changes the distances Za and Zb, which generates an error with respect to the translation magnification σ that is used as a known value. As a result, the calculated movement speed Vob of the moving object 501 also includes an error.

Thus, although the measuring method using the speckle pattern is suitable for noncontact measurement of in-plane displacement amount and speed of the rough surface object, it is necessary to accurately and stably maintain alignments of a light projection system and a light detection system with respect to the moving object. The measurement system disclosed in Japanese Patent Laid-Open No. 4-86562 arranges the light projection system and the light detection system obliquely with respect to the moving object. To avoid such inclined light projection and light detection systems to employ vertical light projection and light detection systems, use of optical elements such as a half-mirror or a beam splitter is required, which increases the number of optical elements and thereby miniaturization of the measurement apparatus is prevented.

On the other hand, there is also a method for measuring a speed by using an image field speckle pattern generated through an image-forming optical system. This measuring method can cancel influences of the vibration and inclination of the moving object. However, this measuring method requires accurate arrangement of sensors and the moving object to positions where they have an image-forming relationship, which is difficult.

SUMMARY OF THE INVENTION

The present invention provides a small measurement apparatus capable of accurately measuring a relative displacement amount or a relative displacement speed of a measuring object with respect to a light source (measurement apparatus), or a surface roughness of the measuring object, by using a speckle pattern or the like, without depending on a distance between the measuring object and a light-receiving element.

The present invention in its first aspect provides a measurement apparatus as specified in claims 1 to 7.

Further, the present invention in its second aspect provides an optical apparatus as specified in claim 8.

Other aspects of the present invention will become apparent from the following description and the attached drawings.

BRIEF DESCRIPTION OF THE DRAWINGS

FIG. 1A shows a perspective view of a measurement apparatus that is Embodiment 1 of the present invention.

FIG. 1B shows a front view and a side cross-sectional view of the measurement apparatus of Embodiment 1.

FIG. 2 shows a perspective view of the measurement apparatus of Embodiment 1.

FIGS. 3A to 3D show detailed explanatory drawings of the measurement apparatus of Embodiment 1.

FIG. 4A shows a circuit diagram of a signal processing circuit part in the measurement apparatus of Embodiment 1.

FIG. 4B shows a waveform chart of an output signal from the signal processing circuit part in the measurement apparatus of Embodiment 1.

FIGS. 5A and 5B show drawings for explaining differences between a conventional measurement apparatus and the measurement apparatus of Embodiment 1.

FIGS. 6A and 6B show an optical configuration of the measurement apparatus of Embodiment 1.

FIG. 7 shows examples of the output signal from the measurement apparatus of Embodiment 1.

FIG. 8 shows a configuration of a measurement apparatus that is Embodiment 2 of the present invention.

FIGS. 9A to 9C show configurations of measurement apparatuses that are Embodiment 3 of the present invention.

FIGS. 10A and 10B show a configuration of part of a color copying machine that is Embodiment 4 of the present invention.

FIG. 11 shows a configuration of part of an inkjet printer that is Embodiment 5 of the present invention.

FIG. 12 shows a configuration of a video camera that is Embodiment 6 of the present invention.

FIG. 13 shows a configuration of a conventional measurement apparatus.

DESCRIPTION OF THE PREFERRED EMBODIMENTS

Exemplary embodiments of the present invention will be described hereinafter with reference to the accompanying drawings.

First Embodiment

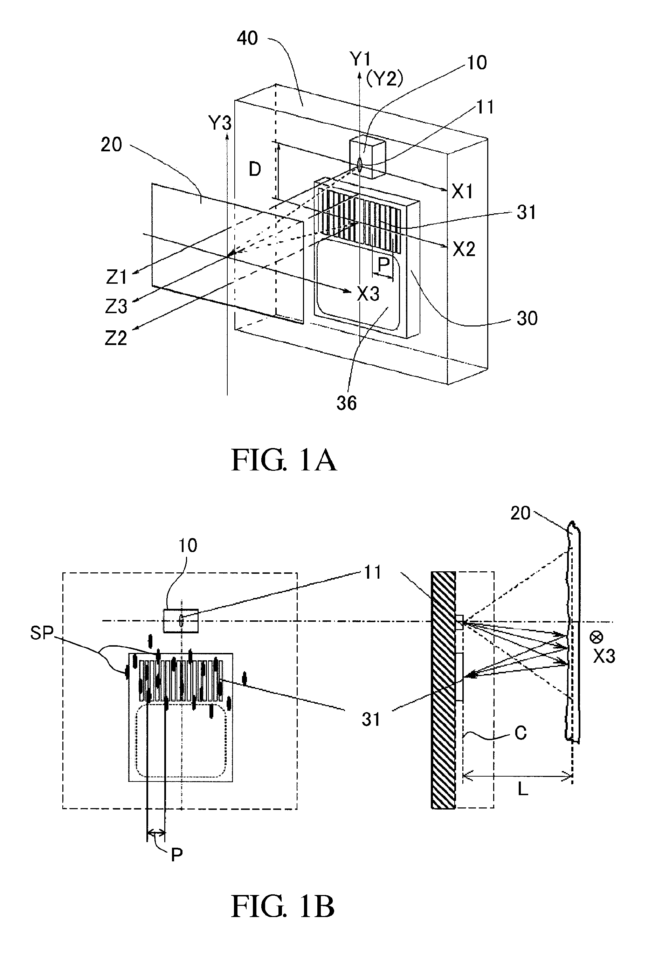

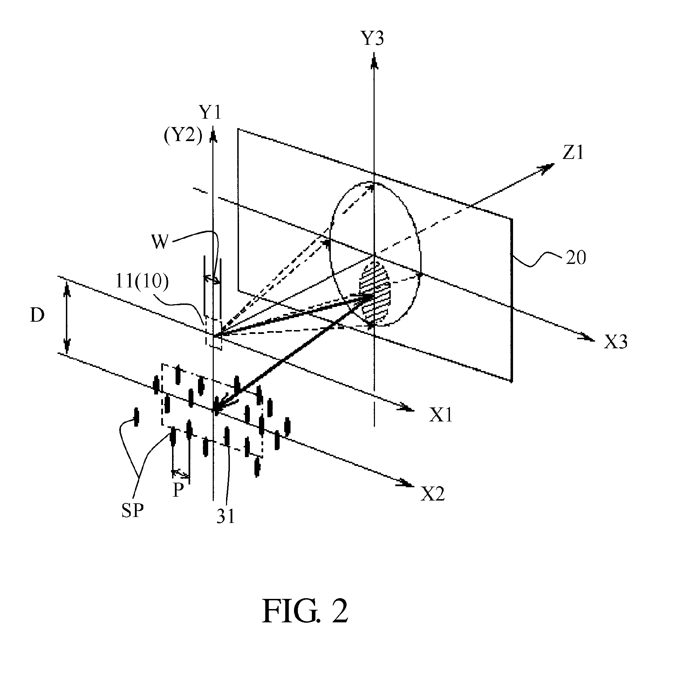

FIGS. 1A and 1B schematically show a configuration of a measurement apparatus that is a first embodiment (Embodiment 1) of the present invention. FIG. 2 shows a state in which a speckle pattern is formed, or optical images (hereinafter, referred to as "reflection optical images") having a light intensity distribution produced by an image-forming effect and an interference effect of a concave-convex shape of a surface of a measuring object is formed, with a light flux reflected by the surface of the measuring object in the measurement apparatus.

In FIG. 1A and FIG. 2, reference characters X1, X2 and X3 respectively denote a direction of a short side of a light-emitting window which will be described later, an arrangement direction of photodiodes constituting a photodiode array (pitch direction of the reflection optical images) and an in-plane direction of the surface of the measuring object. Reference characters Y1, Y2 and Y3 respectively denote a direction of a long side of the light-emitting window, a longitudinal direction of each of photodiodes constituting the photodiode array and another in-plane direction of the surface of the measuring object. Reference characters Z1, Z2 and Z3 denote a direction orthogonal to the light-emitting window (light-emitting surface), a direction orthogonal to the photodiode array (light-receiving surface) and a direction orthogonal to the surface of the measuring object.

In these figures, reference numeral 10 denotes a current confinement structure semiconductor light-emitting element as a light source. The light-emitting element 10 is a compound semiconductor light-emitting element having a current confinement structure to limit a light-emitting area to part of a light-emitting layer. The light-emitting element 10 is a point light source. This light-emitting element 10 is hereinafter referred to as "LED chip 10". Reference numeral 11 denotes the light-emitting window of the LED chip 10 which forms an effective light-emitting area of the LED chip 10.

Reference numeral 20 denotes the measuring object (hereinafter merely referred to as "object") whose surface is formed as an optical diffusing surface like a metallic rough surface. The object 20 moves in the direction X3 with respect to the measurement apparatus (in other words, to the LED chip 10).

In this embodiment, although description will be made of the case where the object 20 moves with respect to the measurement apparatus, the measurement apparatus may move with respect to a fixed object. In other words, the measurement apparatus and the object may move relatively to each other.

Further, although the measurement apparatus of this embodiment is capable of measuring at least one of a relative displacement amount between the object 20 and the measurement apparatus, a relative displacement speed therebetween and a surface roughness of the object 20, description will hereinafter be made of the case where the measurement apparatus measures a displacement amount of the object 20 with respect to the measurement apparatus.

Reference numeral 31 denotes a light-receiving element that receives the reflection optical images and is constituted by a photodiode array capable of photoelectrically converting the reflection optical images into electrical signals. This light-receiving element 31 is hereinafter referred to as "photodiode array 31". Reference numeral 30 denotes a photo IC chip, which is a silicon semiconductor element including a signal processing circuit part 36 and the photodiode array 31.

The LED chip 10 and the photo IC chip 30 including the photodiode array 31 and the signal processing circuit part 36 constitute a detection head 40 as a reflective optical sensor (photosensor).

A divergent light flux with coherency emitted from the LED chip 10 is projected onto a wide range on the surface (rough surface) of the object 20. Light rays scattered at respective points on the rough surface of the object 20 are interfered with each other to form the reflection optical images (speckle pattern) SP generated as an irregular interference pattern or an irregular image-forming pattern in a wide space region including the LED chip 10 and the photo IC chip 30. The divergent light flux emitted from the LED chip 10 is directly projected onto the object 20 without passing a surface having an optical power.

When the surface (rough surface) of the object 20 is moved in the direction X3, the reflection optical images SP are deformed while being moved. The movement of the reflection optical images SP due to displacement or deformation of the surface of the object 20 depends on a type of the displacement or deformation, an optical system to project light onto the object or to detect the reflection optical images SP, and a detection position (observation position) for detecting the reflection optical images SP. The displacement of the object 20 appears in the reflection optical images SP as an enlarged or contracted displacement according to divergence or convergence of the light flux projected onto the object 20 and to the observation position for detecting the reflection optical images SP.

In this embodiment, the light flux emitted from the LED chip 10 is projected onto the object 20 as a divergent light flux, and a translation magnification (displacement magnification) of the reflection optical image SP is ×2 from a relationship between a curvature radius of a wavefront of the projected light flux and the observation position.

A size of each reflection optical image SP when the rough surface of the object 20 makes an in-plane movement (translation) is determined based on a size of the light-emitting window 11 of the LED chip 10, a size of the projected light flux on the light-projected surface (rough surface), the curvature radius of the wavefront of the projected light flux and the like. A shape of each reflection optical image SP depends on a wavelength of the projected light flux, an incident angle thereof on the object 20 and a structure of the rough surface of the object 20.

FIG. 1B and FIG. 2 show the reflection optical images SP that have an average pitch P and are formed near the photodiode array 31.

In FIG. 1B, a distance from the light-emitting window (light-emitting surface) 11 of the LED chip 10 to the surface of the object 20 and a distance from the surface of the object 20 to the light-receiving surface of the photodiode array 31 are equal to each other, the distances being set to L. In other words, the light-emitting surface of the LED chip 10 and the light-receiving surface of the photodiode array 31 are disposed on a same plane shown by C in the figure. This distance relationship makes a displacement amount of the speckle pattern twice as large as that of the object 20.

The plane C is parallel to a plane on which the object 20 is moved (in other words, the object 20 is relativity displaced with respect to the measurement apparatus). Moreover, the LED chip 10 and the photodiode array 31 are arranged on an axis orthogonal to a direction of the relative displacement of the object 20 and the measurement apparatus.

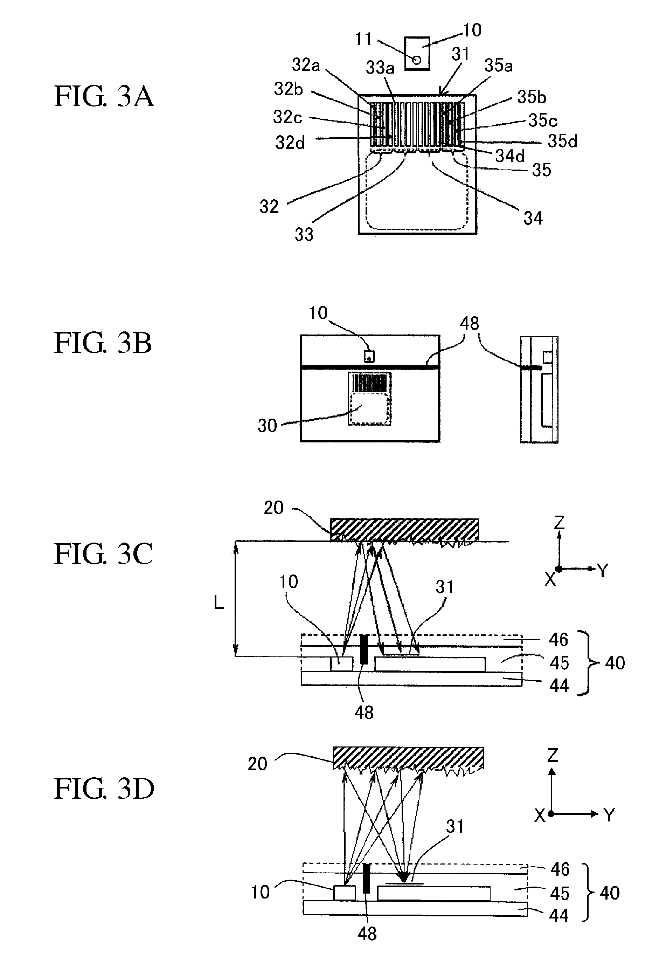

FIGS. 3A to 3C show details of the detection head 40. FIG. 3A shows details of the LED chip 10 and the photo IC chip 30. The light-emitting window (effective light-emitting area) 11 of the LED chip 10 is formed to have a rectangular shape or an oval shape with a size of about $40 \times 150 \mu m$.

The LED chip 10 is a red LED whose center emission wavelength $\lambda c$ is 650nm, and whose spectrum half width $\Delta\lambda$ of its emission wavelength is about 15nm.

As described above, the short side direction of the light-emitting window 11 is parallel to the direction X1. A width W (=$40\mu m$) of the short side of this light-emitting window 11 is an important size for determining spatial coherency of the light source, and influences speckle shapes of the speckle pattern and an optical contrast thereof. Specifically, it is desirable that the width of the short side of the light-emitting window 11 be set to half or less than half of an average period of an average spatial intensity distribution of the reflection optical images SP formed on the light-receiving surface of the photodiode array 31.

The photo IC chip 30 is disposed below the LED chip 10. In the photo IC chip 30, the photodiode array 31 is disposed at a position closer to the LED chip 10 than the signal processing circuit part 36.

In the photodiode array 31, sixteen photodiodes 32a, 32b, 32c, 32d, 33a, ···, 34d, 35a, 35b, 35c and 35d are arranged at regular intervals in the direction X2 that is a horizontal direction in the figure.

These photodiodes 32a, 32b, 32c, 32d, 33a, ···, 34d, 35a, 35b, 35c and 35d are arranged, in order to enable detection of the average pitch P of the reflection optical images SP being formed on the light-receiving surface (array surface) of the photodiode array 31, so as to extract fundamental spatial frequency components corresponding to a size of P, the fundamental spatial frequency components showing an intensity distribution of the light projected onto the light-receiving surface. A period corresponding to the size of P is referred to as "fundamental period" of the detection head 40.

The sixteen photodiodes 32a, 32b, 32c, 32d, 33a, ···, 34d, 35a, 35b, 35c and 35d are arranged with a pitch of 1/4 of the fundamental period P, that is, a pitch of P/4. Moreover, these photodiodes are arranged to form four sets (32, 33, 34 and 35) each including four photodiodes from the left. The four photodiodes constituting one set include two photodiodes that provide outputs of an A-phase and a B-phase having a phase difference of 90 degrees from each other and two photodiodes that provide outputs of an AB-phase and a BB-phase having a phase difference of 180 degrees from each other.

The four photodiodes arranged as described above provide output electric currents of the A-phase, the AB-phase, the B-phase and the BB-phase having mutual phase differences of 90 degrees with the movement of the object 20. These output electric currents are converted into voltages by a current-voltage converter installed in the signal processing circuit part 36, and a differential between the voltages of the A-phase and the AB-phase and a differential between the voltages of the B-phase and the BB-phase are taken and amplified by a differential amplifier to obtain displacement output signals of the A-phase and the B-phase having a phase difference of 90 degrees from each other.

FIG. 3B shows a package that seals the LED chip 10 and the photo IC chip 30 each of which is a semiconductor element. As shown in FIG. 3B, a light-shielding wall 48 for preventing the light flux emitted from the light-emitting window 11 of the LED chip 10 from directly entering the photodiode array 31 is formed between the LED chip 10 and the photo IC chip 30.

FIG. 3C shows optical paths between the detection head 40 and the object 20. The optical paths described in FIG. 3C are optical paths formed in a case where the surface of the object 20 is a mirror surface.

FIG. 3D shows optical paths between the detection head 40 and the object 20 formed in a case where the surface of the object 20 is a rough surface. The optical paths are optical paths of light rays that contribute to formation of a speckle image in a case where the speckle pattern is formed by the reflected light flux from the surface of the object 20.

As shown in FIGS. 3C and 3D, the detection head 40 includes an interconnection substrate 44 on which the LED chip 10 and the photo IC chip 30 are mounted and which supports them, and a light transmissive sealing resin 45 that covers the LED chip 10 and the photo IC chip 30. In addition, the detection head 40 includes a transparent glass 46 disposed on the sealing resin 45.

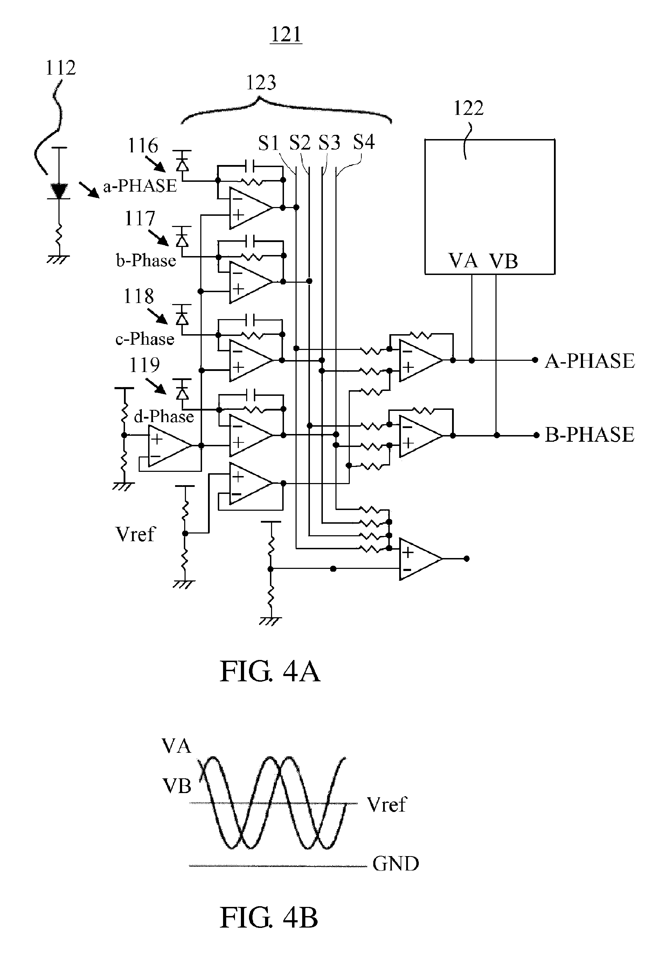

FIG. 4A shows a circuit configuration of the signal processing circuit part 36. In the sixteen photodiodes 32a, 32b, 32c, 32d, 33a, ···, 34d, 35a, 35b, 35c and 35d shown in FIG. 3A, photodiodes to which a same suffix a, b, c or d is added are electrically connected to each other. For example, the photodiodes 32a, 33a, 34a and 35a are electrically connected to each other. The four photodiodes to which the suffix a is added are hereinafter referred to as "a-phase photodiodes 116", and the four photodiodes to which the suffix b is added are hereinafter referred to as "b-phase photodiodes 117". The four photodiodes to which the suffix c is added are hereinafter referred to as "c-phase photodiodes 118, and the four photodiodes to which the suffix d is added are hereinafter referred to as "d-phase photodiodes 119".

Output signals from the a-phase to d-phase photodiodes 116 to 119 are input to an electric circuit unit 121. The electric circuit unit 121 includes an emission circuit of a light-emitting part 112 of the LED chip 10, an analog signal processor 123, and a position calculating part 122 that calculates a movement amount of the object 20 to obtain a position of the object 20. The analog signal processor 123 obtains, as shown in FIG. 4B, an A-phase output signal VA as a differential output of the a-phase and c-phase photodiodes 116 and 118 and a B-phase output signal VB as a differential output of the b-phase and d-phase photodiodes 117 and 119.

The A-phase output signal VA from the analog signal processor 123 that is input to the position calculating part 122 has a value corresponding to a sum of an alternate-current component Va and a direct-current component Vref, and the B-phase output signal VB from the analog signal processor 123 that is input to the position calculating part 122 has a value corresponding to a sum of an alternate-current component Vb and the direct-current component Vref. The position calculating part 122 counts peaks of the A-phase output signal VA (=Va+Vref) or the B-phase output signal VB (=Vb+Vref) to obtain the number of passages of the reflection optical images during the movement of the object 20. The movement amount of the object 20 is calculated by multiplying the average pitch P of the reflection optical images by the obtained number of passages thereof.

Moreover, the movement amount of the object 20 equal to or less than the average pitch P of the reflection optical images can be obtained by calculating a phase angle between the A-phase and the B-phase based on the alternate-current components of the A-phase and B-phase output signals VA and VB.

For example, a method of calculating the phase angle from an arctangent value obtained by arctangent calculation of the A-phase and B-phase output signals VA and VB each having a sine waveform enables improvement of detection resolution of the movement amount of the object 20.

Next, description will be made of advantages of the measurement apparatus using the current confinement structure semiconductor light-emitting element (current confinement structure LED) as the LED chip 10.

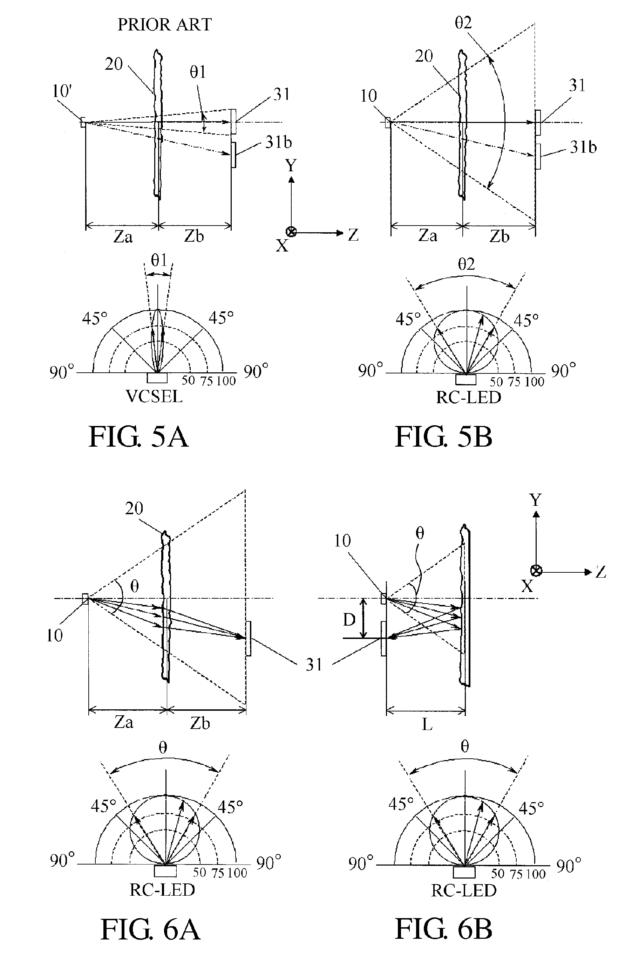

FIGS. 5A and 5B respectively show in upper parts an optical configuration of a measurement apparatus using a laser diode 10' and an optical configuration of the measurement apparatus of this embodiment using the LED chip 10 that is the current confinement structure LED. FIGS. 5A and 5B respectively show in lower parts a light distribution angle range of the measurement apparatus using the laser diode 10' and a light distribution angle range of the measurement apparatus of this embodiment using the LED chip 10. These figures show a transmissive optical configuration equivalent to the above-described reflective optical configuration.

As described above, the light source (the laser diode 10' and the LED chip 10) and the photodiode array 31 are respectively disposed at positions whose distances from the object 20 are equal to each other (Za=Zb). The photodiode array 31 is disposed on a principal ray emitted from the light source. Reference numeral 31b in each figure denotes a photodiode array corresponding to the photodiode array 31 and being disposed away from the principal ray.

In FIG. 5A, spot light from the laser diode 10' is projected onto the object 20 based on light distribution characteristics of the laser diode 10'. Since the light distribution angle range θ1 of the laser diode 10' is narrow, the light from the laser diode 10' hardly enters the photodiode array 31b disposed away from the principal ray, and therefore light utilization efficiency is low. Thus, when using the laser diode 10' as the light source, it is necessary to dispose the photodiode array 31 near an optical axis of the laser diode 10'.

On the other hand, in FIG. 5B, since the light distribution angle range θ2 of the LED chip 10 is wider than that of the laser diode 10', the light from the LED chip 10 is projected onto a wide area on the object 20. This enables a sufficient amount of light to enter each of the photodiode array 31 and the photodiode array 31b disposed away from the principal ray.

FIG. 6A shows in an upper part a transmissive optical configuration of a measurement apparatus in which the LED chip 10 is shifted to a position shown by reference numeral 31b and shows in a lower part a light distribution angle range of the same measurement apparatus. FIG. 6B shows in an upper part a reflective optical configuration equivalent to that shown in FIG. 6A and shows in a lower part a light distribution angle range thereof. FIG. 6B shows an actual optical configuration in this embodiment.

In the measurement apparatus of this embodiment, the distance Za from the light-emitting surface of the LED chip (light source) 10 to the object 20 and the distance Zb from the photodiode array (light-receiving element) 31 to the object 20 are equal to each other, and further the following condition is satisfied for the light distribution characteristic of this light source.

$$\tan(\theta/2) > D/(2 \cdot L) \quad ...(1).$$

In the condition (1), as shown in FIGS. 6 A and 6B, θ represents the light distribution angle range of the LED chip 10, and D represents a distance between a center of the light-emitting area of the LED chip 10 and a center of a light-receiving area of the photodiode array 31. L (=Za=Zb) represents the distance from the light-emitting surface of the LED chip 10 to the object 20.

The condition (1) shows an arrangement condition to cause the center of the light-receiving area of the photodiode array 31 to be included in the light distribution angle range θ of the LED chip 10 shown in FIGS. 6A and 6B.

In this embodiment, the use of the current confinement structure LED having a wide light distribution angle range θ as the LED chip (light source) 10 enables the arrangement shown in FIG. 6B. Mounting the LED chip 10 and the photodiode array 31 on the same interconnection substrate 44 as shown in FIGS. 3C and 3D can equalize the distances (L) thereof from the object 20. As a result, a value of the translation magnification σ (σ=2) of the reflection optical image can be kept constant even if the distance L (=Za=Zb) varies, and the size and shape of the reflection optical image also become stable.

As described above, this embodiment can achieve a small measurement apparatus capable of measuring the movement amount of the object 20 with high accuracy by using the reflection optical images even if the distance between the object 20 and the photodiode array 31 varies.

Second Embodiment

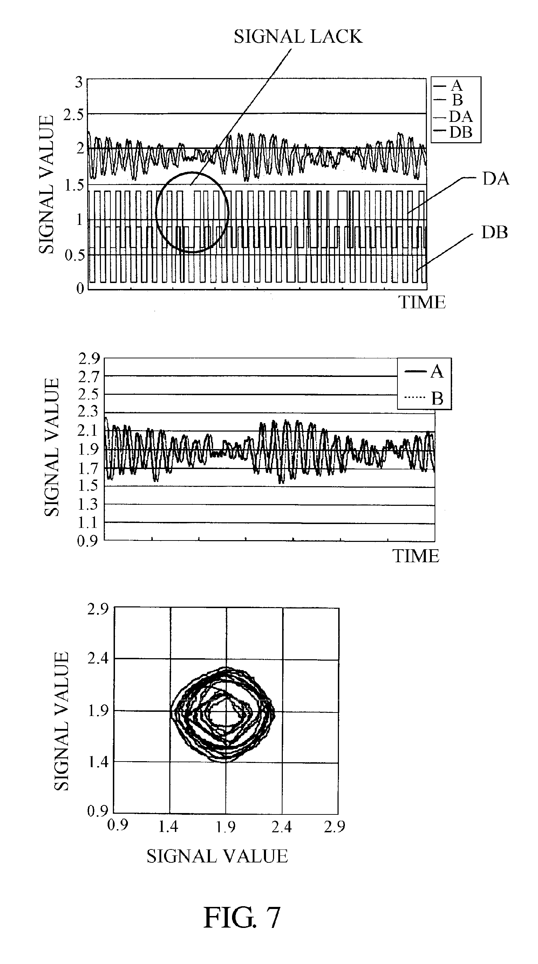

FIG. 7 shows an example of output signals in a measurement apparatus that is a second embodiment (Embodiment 2) of the present invention. An upper part in FIG. 7 shows signal values of A-phase and B-phase analog signals generated in a signal processing circuit part corresponding to the signal processing circuit part 36 previously shown in FIG. 4A, and signal values of DA-phase and DB-phase digital signals obtained by binarizing the analog signals. A middle part in FIG. 7 shows A-phase and B-phase output signals output from an analog signal processor corresponding to the analog signal processor 123 shown in FIG. 4A. A lower part in FIG. 7 shows a Lissajous figure in which X and Y axes respectively represent the A-phase and B-phase analog signals.

The measurement apparatus described in Embodiment 1 uses the photodiode array 31 as the light-receiving element. In this case, however, a dropout phenomenon, that is, a signal lack occurs at a certain frequency as shown in the digital signal in a circled area of the upper part in FIG. 7, which becomes a problem in a general reflection optical image detection system. This problem is a problem in principle, which should be avoided in embodiments of the present invention, because a state where the measurement of the displacement amount and the displacement speed of the object may be unable to be performed.

In this case, in general, the dropout phenomenon can be avoided by using an output signal from another light-receiving element being provided so as to complement the signal lack in the output signal from the light-receiving element 31.

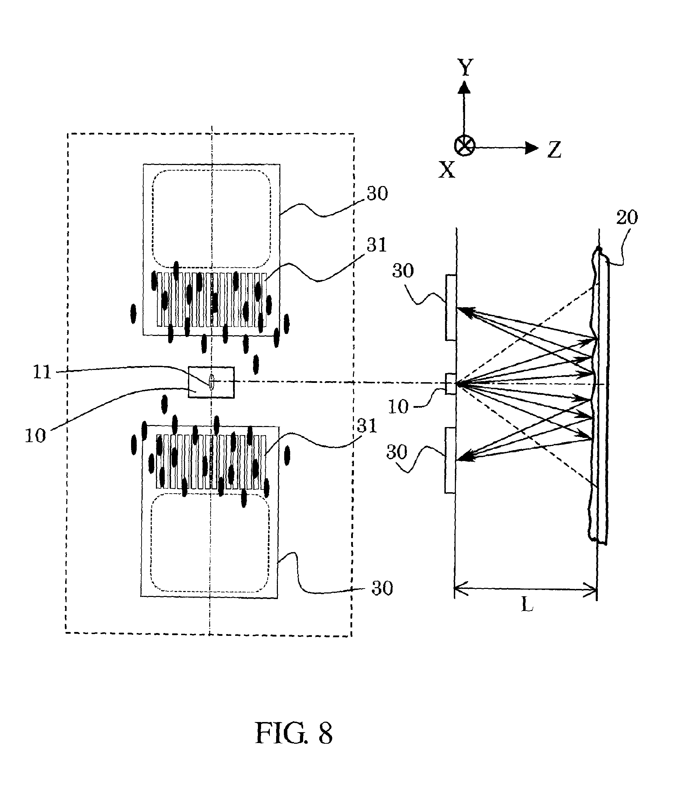

FIG. 8 shows the measurement apparatus of Embodiment 2 having a specific configuration aiming to avoid the dropout phenomenon. In this measurement apparatus, light emitted from one LED chip 10 is projected onto two mutually different areas on an object 20. The dropout phenomenon can be avoided by receiving reflection optical images of the two areas formed with light fluxes respectively reflected at the two areas by two separate photo IC chips 30 (photodiode arrays 31).

Also in this embodiment, as in Embodiment 1, a configuration making a distance Za from a light-emitting surface of the LED chip (light source) 10 to the object 20 and a distance Zb from each of the photodiode arrays (light-receiving elements) 31 to the object 20 equal to each other and satisfying the condition (1) for the light distribution characteristics of the light source is effective.

Especially, it is necessary in this embodiment that the condition (1) be satisfied for the two light-receiving elements 31 shown in FIG. 8.

This embodiment can use the common LED chip 10 for the two photo IC chips 30, which makes it possible to achieve a low-cost and small measurement apparatus.

Third Embodiment

Next, description will be made of a measurement apparatus that is a third embodiment (Embodiment 3) of the present invention. It is possible to measure a movement speed of an object 20 by a so-called zone speed detection method using two light-receiving elements 31 as in Embodiment 2. The zone speed detection method obtains cross correlation of reflection optical images to measure a passing time thereof, and detects a movement speed of the reflection optical images to calculate the movement speed of the object 20.

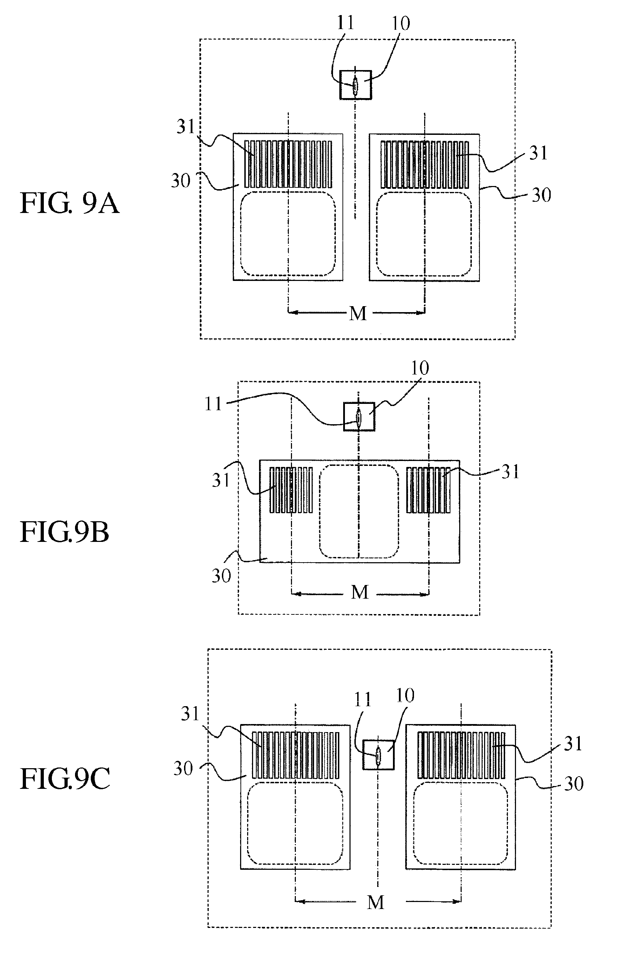

FIGS. 9A, 9B and 9C show examples of a configuration of the measurement apparatus capable of performing the zone speed detection method. In each of the examples, using a common LED chip 10 for plural (two in this embodiment) light-receiving elements (photodiode arrays 31) makes it possible to reduce size and cost of the measurement apparatus.

In the zone speed detection method, a distance M between the two light-receiving elements is important for improving speed detection accuracy. Therefore, the measurement apparatus shown in FIG. 9B is provided with one photo IC chip 30 and two photodiode arrays 31. Such a configuration enables more highly accurate setting of the distance M as compared with the measurement apparatuses shown in FIGS. 9A and 9C each of which includes two photo IC ships 30 mounted on a substrate and thereby a mounting error is easily caused.

Also in this embodiment, as in Embodiment 1, a configuration making a distance Za from a light-emitting surface of the LED chip (light source) 10 to the object 20 and a distance Zb from each of the photodiode arrays (light-receiving elements) 31 to the object 20 equal to each other and satisfying the condition (1) for the light distribution characteristics of the light source is effective. Especially, it is necessary in this embodiment that the condition (1) be satisfied for the two light-receiving elements 31 shown in FIGS. 9A to 9C.

In this embodiment, in order to detect the movement speed of the object 20 with high accuracy, correlation processing of the reflection optical images observed by the two light-receiving elements 31 is performed. An important point to improve correlation accuracy is to make illuminance distributions in the two light-receiving areas equal to each other, and therefore the satisfaction of the condition (1) is an essential requirement.

Fourth Embodiment

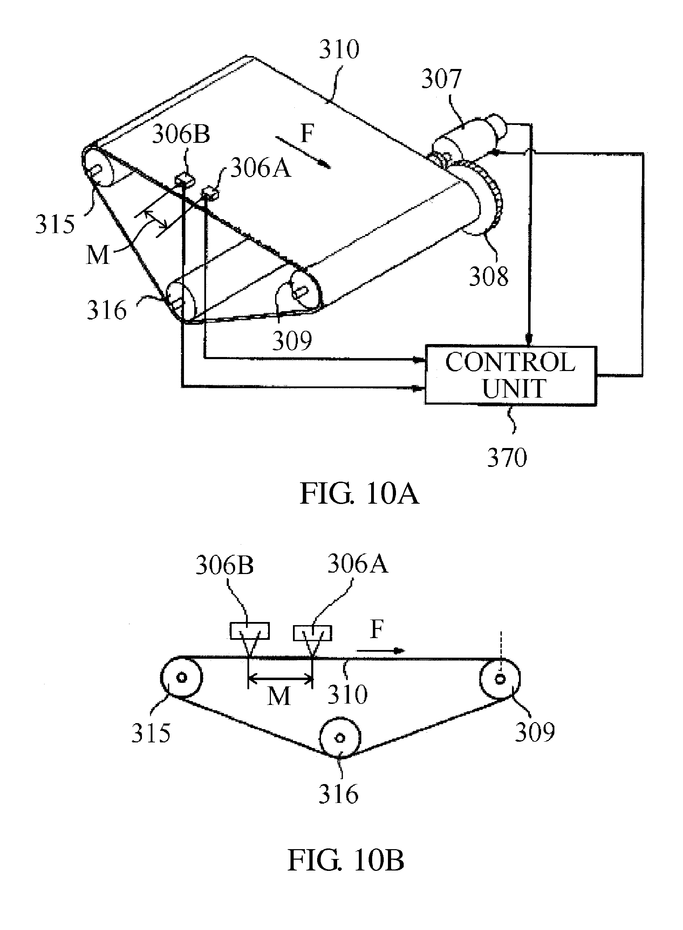

FIG. 10A shows an intermediate transfer belt part of a color copying machine (image-forming apparatus) as an optical apparatus that is a fourth embodiment (Embodiment 4) of the present invention. FIG. 10B shows a side view thereof.

This copying machine includes a transfer unit having an intermediate transfer belt 310 that is a measuring object. The intermediate transfer belt 310 is wrapped between a driving roller 309 and two driven rollers 315 and 316. A motor 307 is controlled by a control unit 370, and rotation of the motor 307 is transmitted through a gear 308 to the driving roller 309, which causes the intermediate transfer belt 310 to rotate in a direction shown by an arrow F in the figure.

Above a planar part of the intermediate transfer belt 310, four color photoconductive drums (not shown) are arranged along the rotation direction of the intermediate transfer belt 310. Inside the intermediate transfer belt 310, four primary transfer rollers (not shown) are arranged so as to sandwich the intermediate transfer belt 310 with the four color photoconductive drums.

The color copying machine performs position adjustment of four color images with high accuracy. In the position adjustment, rotation speed variation of the intermediate transfer belt 310 causes a color displacement, which deteriorates image quality. Therefore, it is necessary to control rotation speed of the intermediate transfer belt 310 with high accuracy.

Thus, in this embodiment, the control unit 370 uses detection heads 306A and 306B described as the reflective optical sensor in Embodiments 1 and 2 to detect the rotation speed (movement speed) of the intermediate transfer belt 310 in a range of the distance M between the detection heads 306A and 306B by the zoon speed detection method. The control unit 370 and the detection heads 306A and 306B constitute a measurement apparatus.

The control unit 370 controls a rotation speed of the driving roller 309 based on the detected rotation speed of the intermediate transfer belt 310 to maintain a constant rotation speed of the intermediate transfer belt 310.

Although FIG. 10B shows the case where the detection heads 306A and 306B are provided outside the intermediate transfer belt 310, they may be provided inside the intermediate transfer belt 310.

This embodiment can also employ the measurement apparatus configuration of Embodiment 3, which reduces cost and size of the measurement apparatus as compared with the case of using the two detection heads 306A and 306B.

Fifth Embodiment

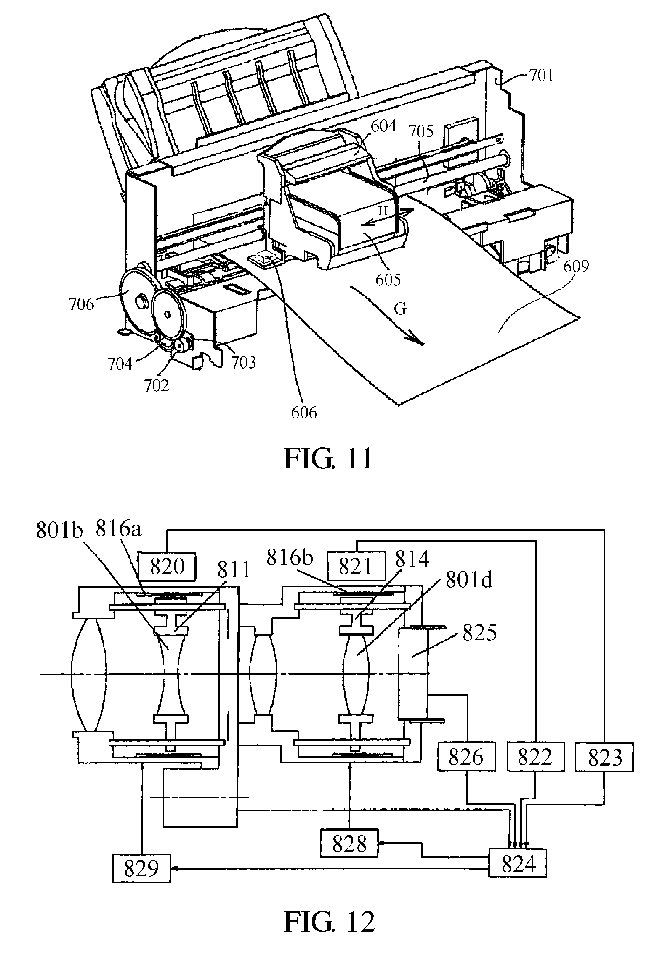

FIG. 11 shows a print head part and a sheet feeding part of an ink-jet printer as an optical apparatus that is a fifth embodiment (Embodiment 5) of the present invention.

In FIG. 11, reference numeral 701 denotes a chassis. Reference numeral 609 denotes a sheet such as a paper which is fed in a direction shown by an arrow G in the figure. Reference numeral 604 denotes a carriage unit that holds a print head (not shown) and an ink tank 605, the carriage unit 604 being driven in a direction shown by an arrow H along a guide bar 705. Reference numeral 703 denotes a sheet feeding motor. Reference numeral 702 denotes a gear provided on a driving shaft, and reference numeral 704 denotes an idler gear. Reference numeral 706 denotes a gear provided on a main feeding roller shaft.

Reference numeral 606 denotes a detection head attached on the carriage unit 604, the detection head 606 corresponding to the reflective optical sensor constituting part of the measurement apparatus described in Embodiments 1 to 3. The detection head 606 projects light onto the sheet 609 that is a measuring object.

This embodiment is configured to measure movement amounts in two-dimensional directions through the detection head 606, that is, to measure a feed amount of the sheet 609 in the direction G and a movement amount of the carriage unit 604 that is another measuring object in the direction H.

Conventional ink-jet printers use a linear encoder to measure the movement amount of the carriage unit. However, miniaturization of the ink-jet printer reduces an installation space for the linear encoder and requires use of a linear scale.

On the other hand, in this embodiment, since the use of the one detection head 606 enables measurement of the feed amount of the sheet 609 and the movement amount of the carriage unit 604, the above-described problem can be cleared. Moreover, the detection head 606 in this embodiment (in other words, the measurement apparatus) is more suitable for a mobile printer smaller than the ink-jet printer shown in FIG. 11.

Sixth Embodiment

FIG. 12 shows a configuration of a video camera (image pickup apparatus) as an optical apparatus that is a sixth embodiment (Embodiment 6) of the present invention. A configuration similar to that of this embodiment may be employed in a digital still camera and an interchangeable lens which are optical apparatuses.

In this video camera, a magnification-varying lens 801b as a variator held by a variator holding frame 811 and a focus lens 801d held by a focus lens holding frame 814 are moved in an optical axis direction by voice coil actuators, respectively.

Reference numerals 820 and 821 denote detection heads described in Embodiments 1 to 3. Reference numerals 816a and 816b denote coils which are measuring objects and constitute parts of the voice coil actuators respectively driving the magnification-varying lens 801b and the focus lens 801d. The coils 820 and 821 are respectively moved integrally with the variator holding frame 811 and the focus lens holding frame 814. The detection heads 820 and 821 respectively project light fluxes onto rough surfaces of the coils 816a and 816b, and respectively receive the light fluxes reflected thereby. Output signals from the detection heads 820 and 821 are respectively input to signal processing circuits 823 and 822. The signal processing circuits 823 and 822 respectively detect (measure) movement amounts (positions) of the coils 816a and 816b, that is, of the magnification-varying lens 801b and the focus lens 801d.

The signal processing circuits 823 and 822 respectively send position information of the magnification-varying lens 801b and position information of the focus lens 801d to a CPU 824. The detection heads 820 and 821 and the signal processing circuits 823 and 822 constitute a measurement apparatus.

The CPU 824 controls energization of the coil 816a through a driver 829 based on the position information of the magnification-varying lens 801b, and controls energization of the coil 816b through a driver 828 based on the position information of the focus lens 801d. This operation makes it possible to move the magnification-varying lens 801b and the focus lens 801d to respective target positions.

An object image formed by an image-taking optical system including the magnification-varying lens 801b and the focus lens 801d is converted into an electrical signal by an image-pickup element 825 such as a CCD sensor and a CMOS sensor. An image processing circuit 826 performs various processing on an output signal from the image-pickup element 825 to produce an image signal.

The detection head (in other words, the measurement apparatus) described in Embodiments 1 to 3 is suitable for a small video camera that drives a lens by using the voice coil actuator as described above. In conventional video cameras, in each of areas shown by reference numerals 820 and 821, a linear variable resistor or a position detector in which a brush is slid on an electrode having a gray code pattern is disposed. Alternatively, a position detector which detects a position of the lens and is constituted by a light-emitting element being moved with a lens holding frame and a photoelectric conversion element such as a PSD (Position Sensitive Detector). However, it is necessary to provide a large space for disposing the resistor or the detector in each case.

In contrast thereto, this embodiment performs noncontact position detection using the rough surfaces of the coils 816a and 816b each of which constitutes part of the voice coil actuator. This makes it unnecessary to provide a large disposing space in the video camera, which enables increase of a freedom degree of design of the video camera and miniaturization thereof.

According to the above-described embodiments, a small measurement apparatus can be achieved which uses the speckle pattern or the optical images having a light intensity distribution generated by the image-forming effect and the interference effect of the concave-convex shape of the surface of the measuring object. Moreover, according to the above-described embodiments, even if the distance between the measuring object and the measurement apparatus varies, the measurement apparatus can measure with high accuracy the relative displacement amount or the relative displacement speed between the measuring object and the light source (measurement apparatus), or the surface-roughness of the measuring object.

While the present invention has been described with reference to an exemplary embodiment, it is to be understood that the invention is not limited to the disclosed exemplary embodiment. The scope of the following claims is to be accorded the broadest interpretation so as to encompass all modifications, equivalent structures and functions.

The measurement apparatus is capable of performing measurement of a relative displacement amount or a relative displacement speed between the apparatus and a measuring object (20). The apparatus includes a light source (10) emitting a divergent light flux with coherency, and a light-receiving element (31) converting reflection optical images (SP) formed by the divergent light flux into electrical signals. A light-emitting surface of the light source and a light-receiving surface of the light-receiving element are disposed on a same plane (C), and the apparatus projects the divergent light flux onto the measuring object without using an optical surface. A condition of $\tan(\theta)/2) > D/(2 \cdot L)$ is satisfied where $\theta$ represents a light distribution angle range of the light source, D represents a distance between centers of a light-emitting area and a light-receiving area, and L represents a distance between the light source and the measuring object.

## Claims

1. A measurement apparatus configured to be capable of performing measurement of at least one of a relative displacement amount and a relative displacement speed between the measurement apparatus and a measuring object (20), the measurement apparatus comprising:

   a light source (10) configured to emit a divergent light flux with coherency; and
   at least one light-receiving element (31) configured to convert reflection optical images (SP) formed by the divergent light flux emitted from the light source, projected onto the measuring object and then reflected thereby into electrical signals,
   wherein a light-emitting surface of the light source (10) and a light-receiving surface of the light-receiving element (31) are disposed on a same plane (C), and
wherein the measurement apparatus projects the divergent light flux emitted from the light source onto the measuring object (20) without using a surface having an optical power, **characterized in that** the following condition is satisfied:

$$\tan(\theta/2) > D/(2 \cdot L)$$

where θ represents a light distribution angle range of the light source (10), D represents a distance between a center of a light-emitting area of the light source and a center of a light-receiving area of the light-receiving element (31), and L represents a distance between the light-emitting surface of the light source and the measuring object (20).

2. A measurement apparatus according to claim 1, wherein the same plane (C) on which the light-emitting surface of the light source (10) and the light-receiving surface of the light-receiving element (31) are disposed is parallel to a plane on which the measuring object (20) is relatively displaced with respect to the measurement apparatus.

3. A measurement apparatus according to claim 1 or 2, wherein the distance (Za) from the light-emitting surface of the light source (10) to the measuring object (20) is equal to a distance (Zb) from the measuring object to the light-receiving surface of the light-receiving element (31).

4. A measurement apparatus according to any one of claims 1 to 3, wherein the light source (10) and the light-receiving element (31) are arranged on an axis orthogonal to a direction of the relative displacement of the measuring object (20) and the measurement apparatus.

5. A measurement apparatus according to any one of claims 1 to 4, wherein the light source (10) is an LED having a current confinement structure.

6. A measurement apparatus according to any one of claims 1 to 5, wherein a size of a light-emitting window (11) of the light source (10) is half or less than half of an average period of an average spatial intensity distribution of the reflection optical image (SP) formed on the light-receiving surface of the light-receiving element (31) by the light flux reflected by the measuring object (20).

7. A measurement apparatus according to any one of claims 1 to 6, wherein the measurement apparatus includes as the light-receiving element plural light-receiving elements (31), and performs the measurement by using the electrical signal output from each of the plural light-receiving elements.

8. An optical apparatus comprising:

a measuring object (20, 310, 811); and
a measurement apparatus configured to be capable of performing measurement of at least one of a relative displacement amount and a relative displacement speed between the measurement apparatus and the measuring object,
wherein the measurement apparatus comprising:
a light source (10) configured to emit a divergent light flux with coherency; and
at least one light-receiving element (31) configured to convert reflection optical images (SP) formed by the divergent light flux emitted from the light source, projected onto the measuring object and then reflected thereby into electrical signals,
wherein a light-emitting surface of the light source (10) and a light-receiving surface of the light-receiving element (31) are disposed on a same plane (C),
wherein the measurement apparatus projects the divergent light flux emitted from the light source onto the measuring object (20) without using a surface having an optical power, and **characterized in that** the following condition is satisfied:

$$\tan(\theta/2) > D/(2 \cdot L)$$

where θ represents a light distribution angle range of the light source (10), D represents a distance between a center of a light-emitting area of the light source and a center of a light-receiving area of the light-receiving element (31), and L represents a distance between the light-emitting surface of the light source and the measuring object (20).

## FIG. 1A

## FIG. 1B

FIG. 2

FIG. 3A

FIG. 3B

FIG. 3C

FIG. 3D

121

123

S1 S2 S3 S4

112

116
a-PHASE

117
b-Phase

118
c-Phase

119
d-Phase

Vref

122

VA VB

A-PHASE

B-PHASE

## FIG. 4A

VA
VB

Vref

GND

## FIG. 4B

PRIOR ART

FIG. 5A

FIG. 5B

FIG. 6A

FIG. 6B

FIG. 7

FIG. 8

FIG. 9A

FIG.9B

FIG.9C

FIG. 10A

FIG. 10B

# FIG. 11

# FIG. 12

FIG. 13

| | Europäisches Patentamt European Patent Office Office européen des brevets | **EUROPEAN SEARCH REPORT** | Application Number EP 10 16 6834 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAKOBSEN, M.L., LARSEN, H.E., HANSON, S.G.: "Compact optical system for mesauring linear and angular displacement of solid structures" SPIE, PO BOX 10 BELLINGHAM WA 98227-0010 USA ORD - 0000-00-00, vol. 5477, 2004, pages 335-347, XP040187347 | 1-3,7,8 | INV. G01P3/36 |
| Y | * page 336, line 12 - line 16 * | 4,5 | |
| A | * page 337, line 10 - line 31; figure 1 * ----- | 6 | |
| Y | US 2008/144010 A1 (CHANG LYE HOCK BERNARD [MY] ET AL CHAN LYE HOCK BERNARD [MY] ET AL) 19 June 2008 (2008-06-19) | 4,5 | |
| A | * paragraph [0019] * * paragraph [0024] - paragraph [0025] * ----- | 1,8 | |
| A | US 2005/024624 A1 (GRUHLKE RUSSELL W [US] ET AL) 3 February 2005 (2005-02-03) * paragraph [0026] * * paragraph [0036]; figure 2c * ----- | 1,3,8 | TECHNICAL FIELDS SEARCHED (IPC) |
| A | DE VEUSTER C ET AL: "Influence of the geometry of illumination and viewing beams on displacement measurement errors in interferometric metrology" OPTICS COMMUNICATIONS, NORTH-HOLLAND PUBLISHING CO. AMSTERDAM, NL LNKD-DOI:10.1016/S0030-4018(97)00336-2, vol. 143, no. 1-3, 1 November 1997 (1997-11-01), pages 95-101, XP004094024 ISSN: 0030-4018 * page 95 - page 96 * ----- | 1,8 | G01P G01D G01B |

The present search report has been drawn up for all claims

| Place of search | Date of completion of the search | Examiner |
|---|---|---|
| Munich | 1 October 2010 | Rabenstein, Winfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 6834

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2010

| Patent document cited in search report | Publication date | Patent family member(s) | Publication date |
|---|---|---|---|
| US 2008144010 A1 | 19-06-2008 | CN 101206541 A<br>DE 102007059720 A1<br>JP 2008217763 A | 25-06-2008<br>24-07-2008<br>18-09-2008 |
| US 2005024624 A1 | 03-02-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63274807 A
- JP 51124454 A

- JP 4086562 A